# EUROPEAN PATENT SPECIFICATION

(11) **EP 0 881 784 B1**
(45) Date of publication and mention of the grant of the patent: **10.11.2004**
(21) Application number: 98304223.5
(22) Date of filing: 28.05.1998
(51) Int. Cl.: H04B 7/185

(54) **Method and apparatus for controlling the transmission power in a mobile radio satellite communication system**
Verfahren und Gerät zur Steuerung des Übertragungspegel in einer mobilen Radio Satelliten Kommunikationsanordnung
Méthode et appareil pour commander la puissance de transmission dans un système de communication radio mobile par satellite

(30) Priority: 28.05.1997 JP 13821897
(43) Date of publication of application: 02.12.1998
(73) Proprietor: NEC CORPORATION, Tokyo (JP)
(72) Inventor: Tsuda, Hiroki, Minato-ku, Tokyo (JP)
(74) Representative: W.P. THOMPSON & CO.

(56) References cited:
- EP-A- 0 688 108
- JP-A- 5 291 852
- JP-A- 8 279 768

## Description

The present invention relates to a method and apparatus for use in controlling the transmission power in a mobile radio satellite communication system. A particular transmission power control method and apparatus for a mobile radio satellite communication system to be described below, by way of example in illustration of the invention, controls the transmission power based on received transmission power control information, particularly when a channel is switched.

Previously proposed arrangements, which it is believed will be helpful in understanding the invention, will now be described with reference to Figs. 3 to 5 of the accompanying drawings, in which:-
Fig. 3 is a block schematic diagram showing the basic arrangement of a mobile radio satellite communication system,
Fig. 4 is a block schematic diagram showing the transmission section of a gateway station and a terminal/mobile station of the mobile radio satellite communication system shown in Fig. 3, and
Fig. 5 is a time chart illustrating the variation in the transmission power using the transmission power control apparatus of Fig. 3.

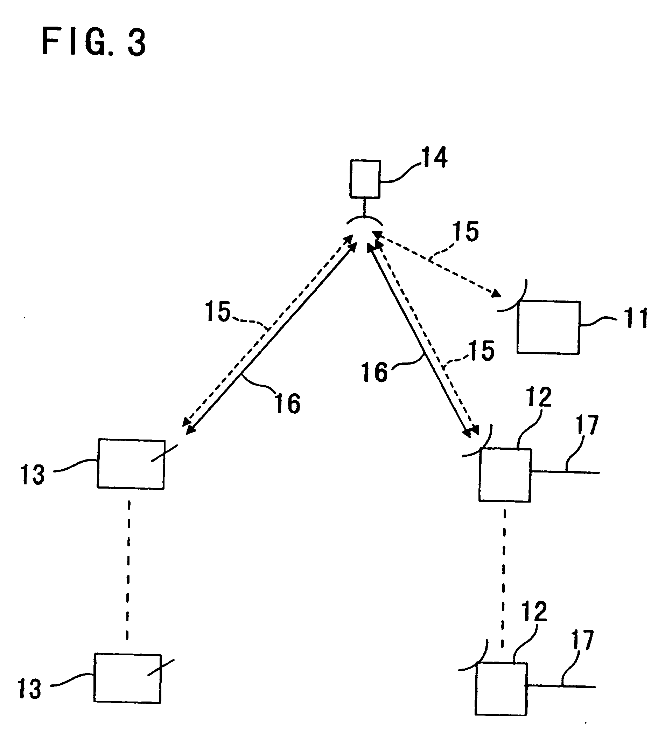

A satellite communication system which effects the channel access of a single channel per carrier (SCPC)/frequency division multiple access (FDMA) system based on a demand assignment will be described first. Referring to Fig. 3, there is shown a satellite communication system of the type mentioned which normally includes a network control station 11, which manages and controls the communications system, gateway stations 12 each connected to public switched telephone networks (PSTN), or private telephone networks, terminals and mobile stations (hereinafter referred to as terminals/mobile stations) 13, through which users access the satellite communications network, and a communication satellite 14.

The network control station 11 supervises the entire network and successively transmits channel signalling information by time division multiplex (TDM) communication using a forward link (also called an outbound link). The TDM communication includes information regarding an incoming call and the channel communication used. Each of the gateway stations 12 and the terminal/mobile stations 13 receives information transmitted thereto by the time division multiplex communication and effects a call request and responds to an incoming call based on the received information using a return link (inbound). The return link is used for the transmission of a call request and an incoming call response burst signal transmitted from each of the gateway stations 12 and the terminal/mobile stations 13 in a predetermined time slot, in accordance with the line information of the time division multiplex communication in a time division multiple access (TDMA).

If the network control station 11 receives a call request and an incoming call response signal transmitted from one of the gateway stations 12 and one of the terminal/mobile stations 13 (including an indirect case wherein a terminal or a mobile station transmits a call request to a gateway station and then the gateway station transmits a channel assignment request), then it informs the gateway station 12 and the terminal/mobile station 13 of an available communication channel over a signalling channel 15. Then, when the gateway station 12 and the terminal/mobile station 13 receive the designated communication channel, they set the channel so that a communication channel 16 is thereafter used in place of the signalling channel 15. Then, through a predetermined sequence, the terminal/mobile station 13 is connected to a PSTN or private switched network (PSTN)/private switched network 17) through the communication satellite 14 and the gateway station 12.

The signalling channel 15, which carries control information in such a sequence of channel connection operations as is described above, communicates the control information, normally using a prescribed maximum transmission level as a standard level, so that a call connection can be effected stably, even in a geographical condition in which the elevation angle is small (which is the most critical communication condition in call connection), in order to ensure a high degree of reliability of the communication system. After the changeover to a communication channel, the transmission level is adjusted so as to minimize any interference with another communication channel and allow the most efficient utilization of the power of the satellite. Further, in a mobile terminal which is driven by a battery, the power dissipation is minimized by such transmission level control to allow utilization for a long time.

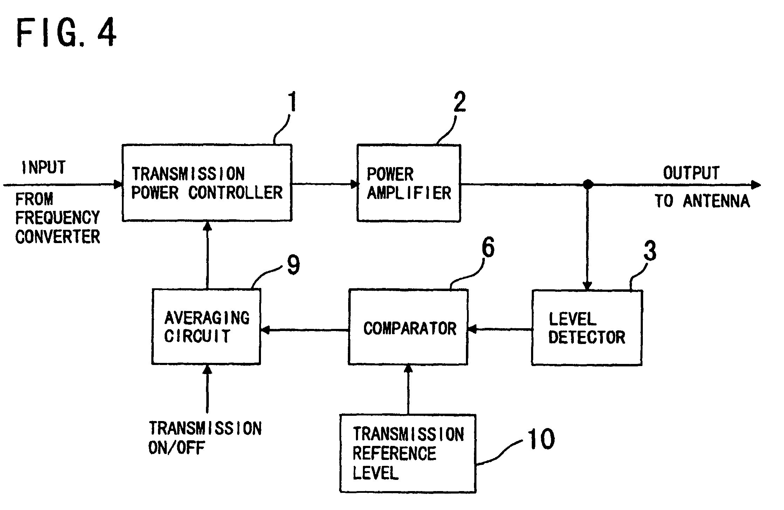

The transmission powers of the gateway station 12 and the terminal/mobile station 13 of the communication system described above are each controlled by an apparatus such as is shown in Fig. 4.

Referring to Fig. 4, the apparatus shown includes a transmission power controller 1 for controlling the transmission power of a modulation signal frequency converted by a frequency converter not shown, a power amplifier 2 for amplifying the power of an output of the transmission power controller 1 to a predetermined transmission power, and outputting the amplified power signal to an antenna not shown, a level detector 3 for detecting the output level of the power amplifier 2, a comparator 6 for comparing the transmission level detected by the level detector 3 with a preset transmission reference level to obtain any error in the level and an averaging circuit 9 for averaging the error of the level from the comparator 6 and controlling the transmission power controller 1 with the averaged level error.

In operation, upon transmission over the signalling channel 15, the transmission level is set to the maximum standard transmission level, and the level of a transmission signal detected by the level detector 3 during transmission is compared with the preset transmission level value by the comparator 6 to obtain a level error. The level error of the detected level from the preset transmission reference level is averaged by the averaging circuit 9. Then, the transmission power is controlled so that, if the detected transmission signal level is higher than the preset transmission level value, then the transmission signal level may be decreased, but if the detected transmission signal level is lower than the preset transmission level, then the decrease of the transmission signal level may be decreased.

A channel is assigned in response to the channel assignment request in the signalling channel 15, and communication via the communication channel 16 is started. After the communication via the communication channel 16 has been started, the terminal/mobile station 13 and the gateway station 12 individually measure the levels of the received signals, set optimum transmission levels for the operation of the system and control the transmission powers thereof. Such a control is disclosed, for example, in the specification of Japanese Patent Laid-Open Application No. Heisei 8-237194. The transmission power control for the signalling channel 15 is performed in a similar manner to that for the communication channel 16, except that the preset transmission level values set for the comparators are different.

After the communication over the communication channel 16 has been completed, communication via the signalling channel 15 is enabled again. The transmission signal level is then set to the standard maximum transmission level, but it is controlled, upon transmission, to the predetermined transmission power by the operation described above.

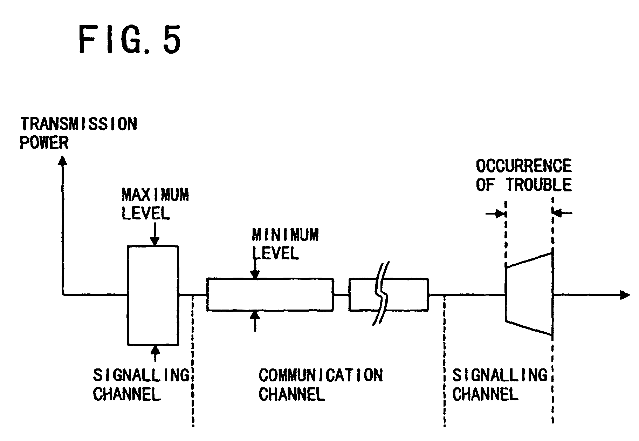

While the transmission level is controlled in accordance with the procedure described above, so that possible interference between communication channels may be minimized and the power of the satellite may be utilized more efficiently, if the control step of the transmission level becomes large, there is experienced the following problem, which will be described with reference to Fig. 5 in which there are illustrated the transmission powers when a channel to be used is changed over between a signalling channel and a communication channel.

When, after communication over the communication channel has been started the transmission level of a station is to be decreased to a lower level, because the received level of the other station is sufficiently high, it is varied at a rate which can be followed up sufficiently so that synchronization can be maintained on the reception side against a variation in amplitude or phase. When the communication is terminated while the transmission power is controlled stably at the lowest transmission level and then communication over the signalling channel is enabled again, the transmission level is set to the standard highest transmission level in preparation for next transmission. When a control signal burst, such as a call request or an incoming call response, is to be transmitted subsequently over the signalling channel, the top of the burst is transmitted with the level controlled to the lower level over the communication channel and the burst is started while the transmission level is controlled so as to increase it to the highest level.

Therefore, it sometimes occurs that a power to noise power ratio of a carrier required by the communication system is not obtained and this can give rise to a problem in synchronization acquisition or in data transmission. Particularly, a top portion of a burst includes a training sequence and/or a unique word for carrier synchronization and/or clock synchronization and plays an important role in the transmission of a data part.

If, on the contrary, the transmission level control response over the signalling channel is made faster, so as to allow quick convergence to a predetermined transmission level, in order to eliminate the problem described above, then the problem may possibly occur that, when the transmission level is controlled after the reception level information of the other station is received over the communication channel, the frame synchronization of the other station cannot be maintained, or that the transmission power control becomes unstable. Such problems are significant particularly where the transmission level control step is large.

JP 08 279 768 and US 5697074 disclose a power control loop for a radio frequency transmitter which includes a power control amplifier, an output and a detector that is coupled to the output for providing an output power signal indicative of output power from the power control loop. A controller generates at least first and second reference signals and a differential amplifier provides a control output that is indicative of a difference between the output power signal and a reference signal. A dual rate filter couples the control output to the power control amplifier so as to vary its gain and the dual rate filter exhibits a fast-reacting filter mode when the controller changes the reference signals to the differential amplifier and a slow-reacting filter mode when the controller applies the first reference signal to the differential amplifier. The fast filter mode enables rapid feedback of the control output to the power control amplifier.

EP 06 88 108 discloses a transmission power control circuit for controlling a power level of a transmission signal comprising a variable attenuator for adjusting the amplitude level of an input signal, a detection circuit for detecting an amplitude of the transmission signal via a branch circuit, a reference voltage source for generating a reference voltage associated to a predetermined level of the transmission signal to be transmitted, a comparator for comparing the reference and detection voltages, a clock generator, an up/down counter for up or down counting pulses of a clock output from the clock generator, a D/A converter for converting the count value of the counter, and a control circuit. The comparator subjects the counter to the up or down counting operation when the detection voltage is less or larger than the reference voltage to provide an attenuation control signal to the attenuator through the D/A converter so that attenuation level is adjusted, whereby the detection voltage substantially coincides with the reference voltage. The control circuit controls the reference voltage source to vary the level of said reference voltage in accordance with the transmission signal and controls the clock generator to generate the clock having a high frequency during a transition period of the reference voltage and a low frequency during the reference voltage being kept substantially constant, whereby change of the transmission power level can be executed at a relatively high speed without interference for the adjacent channels.

It is a feature of a transmission power control method and apparatus for a mobile radio satellite communication system to be described below, by way of example in illustration of the invention, that frame synchronization maintenance and synchronization acquisition of a receiving station and optimum transmission power control are made possible with a simple construction which does not require any complicated control.

According to an aspect of the present invention, there is provided a method of transmission power control for use in a mobile radio satellite communication system wherein a gateway station and a terminal/mobile station effect communication by assignment on demand using a signalling channel and a communication channel via a communication satellite, characterised in that a transmission power control loop, provided in one of the gateway station and the terminal/mobile station for controlling the transmission power of the gateway station or the terminal/mobile station, is controlled so that, when a transmission channel for current use is to be changed over from the signalling channel to the communication channel, a response speed of the transmission power control loop is set to a lower value, but when the transmission channel for current use is to be changed over from the communication channel to the signalling channel, the response speed of the transmission power control loop is set to a higher value.

According to another aspect of the present invention, there is provided a transmission power control apparatus for a mobile radio satellite communication system wherein a gateway station and a terminal/mobile station are arranged to effect communication by a demand assignment using a signalling channel and a communication channel via a communication satellite, characterized by:
a transmission power control loop for detecting a transmission power of each of said gateway station and said terminal/mobile station and feedback controlling a transmission level of the transmission power such that, upon changeover from said signalling channel to said communication channel, said transmission power control loop is arranged to control so that the transmission level may change from a high level to a low level at a low speed, but upon changeover from said communication channel to said signalling channel, said transmission power control loop is arranged to control so that the transmission level may change from a low level to a high level at a high speed.

The transmission power control apparatus may be constructed such that the signalling channel is arranged for use in communication between said gateway station and said terminal/mobile station and between said gateway station and a network control station, and the transmission power levels of said gateway station and said terminal/mobile station are set to the highest level. Further, the transmission power control apparatus may be constructed such that the communication channel is arranged for use in communication between said gateway station and said terminal/mobile station, and the transmission power levels of said gateway station and said terminal/mobile station are set to an optimum transmission level based on a reception level detected by one and transmitted to the other of said gateway station and said terminal/mobile station.

Preferably, the transmission power control loop includes transmission power control means for receiving an input signal and controlling the transmission level in accordance with a response control signal, level detection means for detecting an output of said transmission power control means, comparison means for comparing the transmission level detected by said level detection means with a preset transmission level to obtain an error, and response control means for producing a response control signal for controlling said transmission power control means from the error obtained by said comparison means, and further wherein, upon changeover from said signalling channel to said communication channel, said response control means is arranged to control said transmission power control means so that the transmission level may change from a high level to a low level at a low speed, but upon changeover from said communication channel to said signalling channel, said response control means is arranged to control said transmission power control means so that the transmission level may change from a low level to a high level at a high speed.

Further, the averaging means may include discrimination means for discriminating a polarity of the error obtained by said comparison means, and averaging means for averaging error levels whose average sample number is controlled in accordance with the polarity of the error.

Also, said response control means may include selection means for selecting an average sample number based on an output of said discrimination means, and wherein said averaging means is arranged to convert the error level from an analog signal into a digital signal with the average sample number selected by said selection means.

Preferably, said apparatus further comprises power amplification means for power amplifying an output of said transmission power control means, and wherein said level detection means (3) is arranged to detect an output level of said transmission power amplification means.

Further, said response control means may include discrimination means for discriminating a polarity of the error obtained by said comparison means, a filter having a variable cutoff frequency, and selection means for selecting the cutoff frequency of said filter based on an output of said discrimination means, and said transmission power control means is controlled through said filter with the cutoff frequency selected by said selection means.

With a transmission power control method and apparatus such as one of those described above, the transmission level during transmission is monitored and the monitored transmission level is compared with a preset transmission level to change over the average time for sampling the error between the transmission levels to vary the response speed with a simple circuit arrangement which does not require a complicated control. Consequently, when the channel for current use is to be changed over from a signalling channel to a communication channel, the transmission power is controlled so that there is no trouble with synchronization at the reception side. Furthermore, when the channel for current use is to be changed over from the communication channel to the signalling channel, the transmission power is controlled rapidly to a standard level so that there is no trouble in synchronization acquisition or data transmission.

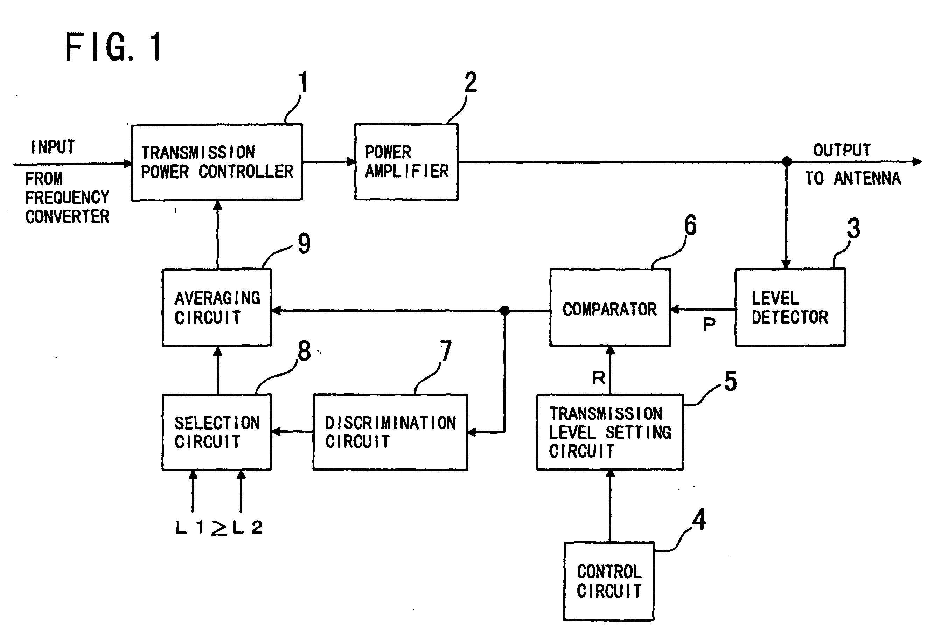

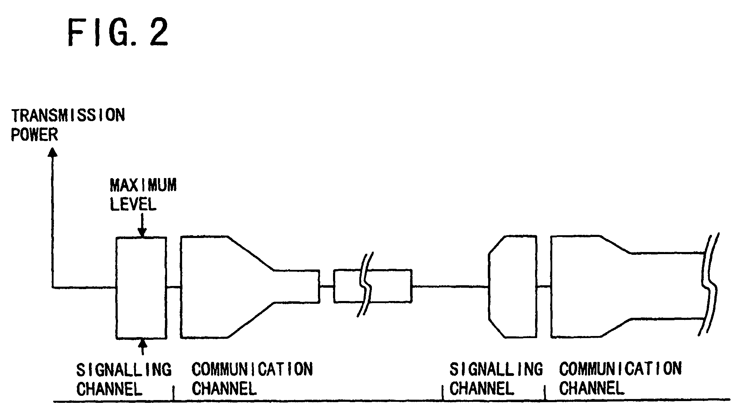

The following description and Figs. 1 and 2 of the accompanying drawings, disclose, by means of an example, the invention which is characterised in the appended claims, whose terms determine the extent of the protection conferred hereby.

In the drawings:-
Fig. 1 is a block schematic diagram of a transmission section of a gateway station and a terminal/mobile station to which a transmission power control apparatus is applied, and
Fig. 2 is a time chart illustrating a variation of the transmission power by the tranmsission power control apparatus shown in Fig. 1.

Referring to Fig. 1, there is shown transmission power control apparatus for incorporation in each of a gateway station and a terminal/mobile station, such as the gateway stations 12 and the terminal/mobile stations 13 described above with reference to Fig. 3.

The transmission power control apparatus of Fig. 1 may be incorporated in a transmission section of each of gateway stations and terminal/mobile stations of a satellite communication system which effects the call connection of a single channel per carrier (SCPC) or a frequency division multiple access (FDMA) system based on assignment on demand, and includes a transmission power controller 1 for controlling the transmission level of a modulation signal frequency converted by a frequency converter (not shown), a power amplifier 2 for power amplifying an output of the transmission power controller 1 to a predetermined transmission level and outputting the power amplified signal to an antenna not shown, a level detector 3 for detecting the output level of the power amplifier 2, a control circuit 4 for analyzing reception information transmitted to the station from another station and setting an optimum transmission level, a transmission level setting circuit 5 for outputting a reference signal of the transmission level set by the control circuit 4, a comparator 6 for comparing the transmission level detected by the level detector 3 with the reference signal of the preset transmission level, a discrimination circuit 7 for discriminating the polarity of a signal output from the comparator 6 and outputting a selection control signal of an average sample number (average time), a selection circuit 8 for selecting an average sample number in response to the selection control signal from the discrimination circuit 7, and an averaging circuit 9 for averaging a number of error levels successively output after each fixed interval of time from the comparator 6 designated by the selection circuit 8 to obtain a digital signal to be used as a control signal for the transmission power controller 1.

The averaging circuit 9 may be formed from an analog to digital (A/D) converter which receives an error component (analog signal) output from the comparator 6 and converts the error component into a digital signal with a predetermined sampling number.

In this instance, the predetermined sample number can be selected from between two average sample numbers L1 and L2 in response to an output of the discrimination circuit 7, and a digital signal which is produced on the basis of the selected average sample number is used to control the transmission level of a modulation signal mentioned above by the transmission power controller 1.

The operation of the transmission power control apparatus shown in Fig. 1 will now be described.

Transmission data to be transmitted first undergo coding processing, such as error correction, differential operation and scrambling and are then digitally modulated, whereafter they are converted into a signal at a radio frequency by a frequency converter not shown. The transmission level of the signal is adjusted by the transmission power controller 1, and then the signal is power amplified to a predetermined level by the power amplifier 2. The thus power amplified signal is sent out from the antenna (not shown) through a duplexer (not shown). Further, the transmission level of the signal being transmitted is monitored by the level detector 3.

The level at which the signal is to be transmitted is set at the transmission level setting circuit 5 by the control circuit 4, and the transmission level setting circuit 5 produces a reference signal corresponding to one of the transmission levels.

The transmission level P detected by the level detector 3 and the reference signal R of the thus set transmission level are compared with each other by the comparator 6 to detect an error (P - R) of the transmission level P from the transmission level R. The error is averaged by the averaging circuit 9 while the polarity of the error (P - R) is discriminated by the discrimination circuit 7, and the average sample number of the averaging circuit 9 is controlled based on a result of the discrimination. Here, the two average sample numbers L1 and L2 are prepared in advance by the selection circuit 8, and one of the average sample numbers L1 and L2 is selectively determined based on the result of the discrimination of the discrimination circuit 7. The transmission power controller 1 is controlled by means of the result of the averaging of the error with the selected average sample number. Consequently, a transmission power control loop is formed from the elements 1, 2, 3, 6, 7, 8 and 9 described above.

If the average sample number of the averaging circuit 9 is set to a comparatively high value, then the response speed is comparatively low, and the control system operates stably, but if a comparatively small average sample number is selected, then a comparatively high response speed is obtained, and convergence to the preset level is reached comparatively quickly.

If the detected transmission level P is lower than the preset transmission level R as seen from Table 1 below, that is, when P - R ≦ 0, the error is averaged by the comparatively large average sample number L1, but if the detected transmission level P is not higher than the preset transmission level R, that is, when P - R > 0, the error is averaged with the comparatively small average sample number L2 (≧ L1).

**Table 1.**

| Control Logic in Average Sample Number Selection | |
|---|---|
| Condition | Used average sample number |
| Detection level P < Preset transmission level R | L1 |
| Detection level P ≧ Preset transmission level R | L2 |
| L1 ≥ L2 | |

By means of the control in accordance with the logic, the transmission channel is changed over from the signalling channel 15 to the communication channel 16 such that, when the transmission level is to be changed over from the maximum transmission level, which is a standard level, to the designated low power level, until after the transmission level is stabilized at the preset level to effect stabilized transmission, the transmission level remains higher than the preset level, and consequently, the error from the preset level is averaged with the comparatively large average sample number L1. The average sample number L1 is then set so that synchronization maintenance on the reception side can be performed without any trouble with the response speed.

Then, when the transmission channel is changed over from the communication channel to the signalling channel and the transmission level is to be changed over from the low power level to the maximum transmission level, which is a standard level, since the transmission level remains lower than the preset level until after it converges to the maximum transmission level, the error from the preset level is averaged with the comparatively low average sample number L2. The convergence to the preset transmission level is thus accelerated by the comparatively low average sample number L2, so that the transmission power is controlled to allow transmission with a predetermined level so that call connection can be performed stably even in a communication condition which is the most severe for a call connection.

The averaging circuit 9 described hereinabove need not be formed from an analog to digital converter, but may be formed from some other element having an equivalent function. For example, the averaging circuit 9 may be formed from a low-pass filter whose cutoff frequency can be controlled from the outside. In this instance, the output of the discrimination circuit 7 is input to the selection circuit 8, by which the cutoff frequency of the filter is controlled.

In particular, transmission power control is performed by the control of the selection circuit 8 such that, where P □ R, the cutoff frequency is set to a comparatively low value to make the response speed low, but where P < R, the cutoff frequency is set to a comparatively high value to make the response speed high. By the use of transmission power control, the problem experienced upon changing over from a control circuit to a communication channel can be minimised.

While a preferred embodiment illustrative of the present invention has been described by way of example using specific terms, it will be understood that changes and variations therein and other embodiments may be conceived within the scope of the protection sought by the following claims.

## Claims

1. A method of transmission power control for use in a mobile radio satellite communication system wherein a gateway station (12) and a terminal/mobile station (13) effect communication by assignment on demand using a signalling channel (15) and a communication channel (16) via a communication satellite (14), **characterised in that** a transmission power control loop (1, 2, 3, 6, 9), provided in one of the gateway station (12) and the terminal/mobile station (13) for controlling the transmission power of the gateway station (12) or the terminal/mobile station (13), is controlled so that, when a transmission channel for current use is to be changed over from the signalling channel (15) to the communication channel (16), a response speed of the transmission power control loop (1, 2, 3, 6, 9) is set to a lower value, but when the transmission channel for current use is to be changed over from the communication channel (16) to the signalling channel (15), the response speed of the transmission power control loop (1, 2, 3, 6, 9) is set to a higher value.

2. A transmission power control apparatus for a mobile radio satellite communication system wherein a gateway station (12) and a terminal/mobile station (13) are arranged to effect communication by a demand assignment using a signalling channel (15) and a communication channel (16) via a communication satellite, **characterized by**:
a transmission power control loop (1, 2, 3, 6, 9) for detecting a transmission power of each of said gateway station (12) and said terminal/mobile station (13) and feedback controlling a transmission level of the transmission power such that, upon changeover from said signalling channel (15) to said communication channel (16), said transmission power control loop (1, 2, 3, 6, 9) is arranged to control so that the transmission level may change from a high level to a low level at a low speed, but upon changeover from said communication channel (16) to said signalling channel (15), said transmission power control loop (1, 2, 3, 6, 9) is arranged to control so that the transmission level may change from a low level to a high level at a high speed.

3. An apparatus according to claim 2, wherein said signalling channel (15) is arranged for use in communication between said gateway station (12) and said terminal/mobile station (13) and between said gateway station (12) and a network control station (11), and the transmission power levels of said gateway station (12) and said terminal/mobile station (13) are set to the highest level.

4. An apparatus according to claim 2, wherein said communication channel (16) is arranged for use in communication between said gateway station (12) and said terminal/mobile station (13), and the transmission power levels of said gateway station (12) and said terminal/mobile station (13) are set to an optimum transmission level based on a reception level detected by one and transmitted to the other of said gateway station (12) and said terminal/mobile station (13).

5. An apparatus according to claim 2, wherein said transmission power control loop (1, 2, 3, 6, 9) includes transmission power control means (1) for receiving an input signal and controlling the transmission level in accordance with a response control signal, level detection means (3) for detecting an output of said transmission power control means (1), comparison means (6) for comparing the transmission level detected by said level detection means (3) with a preset transmission level to obtain an error, and response control means (7, 8, 9) for producing a response control signal for controlling said transmission power control means (1) from the error obtained by said comparison means (6), and further wherein, upon changeover from said signalling channel (15) to said communication channel (16), said response control means (7, 8, 9) is arranged to control said transmission power control means (1) so that the transmission level may change from a high level to a low level at a low speed, but upon changeover from said communication channel (16) to said signalling channel (15), said response control means (7, 8, 9) is arranged to control said transmission power control means (1) so that the transmission level may change from a low level to a high level at a high speed.

6. An apparatus according to claim 5, wherein said response control means includes discrimination means (7) for discriminating a polarity of the error obtained by said comparison means (6), and averaging means (9) for averaging error levels whose average sample number is controlled in accordance with the polarity of the error.

7. An apparatus according to claim 6, wherein said response control means includes a selection means (8) for selecting an average sample number based on an output of said discrimination means (7), and wherein said averaging means (9) is arranged to convert the error level from an analog signal into a digital signal with the average sample number selected by said selection means (9).

8. An apparatus according to claim 5, further comprising power amplification means (2) for power amplifying an output of said transmission power control means (1), and wherein said level detection means (3) is arranged to detect an output level of said transmission power amplification means (2).

9. An apparatus according to claim 5, wherein said response control means includes discrimination means (7) for discriminating a polarity of the error obtained by said comparison means (6), a filter having a variable cutoff frequency, and selection means for selecting the cutoff frequency of said filter based on an output of said discrimination means (7), and said transmission power control means (1) is controlled through said filter with the cutoff frequency selected by said selection means.

## Patentansprüche

1. Verfahren zur Steuerung der Übertragungsleistung für die Verwendung in einer Satelliten-Mobilfunk-Kommunikationsanordnung, wobei eine Gatewaystation (12) und eine Endgerät-/Mobilstation (13) durch Zuweisung nach Bedarf unter Nutzung eines Signalisierungskanals (15) und eines Kommunikationskanals (16) über einen Kommunikationssatelliten (14) eine Kommunikation ausführen, **dadurch gekennzeichnet, daß** eine Übertragungsleistungsregelungsschleife (1, 2, 3, 6, 9), welche in der Gatewaystation (12) oder der Endgerät/Mobilstation (13) vorgesehen ist, um die Übertragungsleistung der Gatewaystation (12) oder der Endgerät-/Mobilstation (13) zu steuern, derart geregelt wird, daß eine Antwortgeschwindigkeit der Übertragungsleistungsregelungsschleife (1, 2, 3, 6, 9) auf einen niedrigeren Wert gesetzt wird, wenn ein Übertragungskanal für die aktuelle Verwendung von dem Signalisierungskanal (15) auf den Kommunikationskanal (16) umgeschaltet werden soll, und die Antwortgeschwindigkeit der Übertragungsleistungsregelungsschleife (1, 2, 3, 6, 9) aber auf einen höheren Wert gesetzt wird, wenn der Übertragungskanal für die aktuelle Verwendung von dem Kommunikationskanal (16) auf den Signalisierungskanal (15) umgeschaltet werden soll.

2. Vorrichtung zur Steuerung der Übertragungsleistung in einer Satelliten-Mobilfunk-Kommunikationsanordnung, wobei eine Gatewaystation (12) und eine Endgerät/Mobilstation (13) eingerichtet sind, durch eine Zuweisung nach Bedarf unter Nutzung eines Signalisierungskanals (15) und eines Kommunikationskanals (16) über einen Kommunikationssatelliten eine Kommunikation auszuführen, **gekennzeichnet durch**:
eine Übertragungsleistungsregelungsschleife (1, 2, 3, 6, 9) zur Erkennung einer Übertragungsleistung sowohl der Gatewaystation (12) als auch der Endgerät-/Mobilstation (13) und zur Rückführungsregelung eines Übertragungspegels der Übertragungsleistung derart, daß die Übertragungsleistungsregelungsschleife (1, 2, 3, 6, 9) so eingerichtet ist, und daß sie den Übertragungspegel nach dem Umschalten von dem Signalisierungskanal (15) auf den Kommunikationskanal (16) langsam von einem hohen Pegel auf einen niedrigen Pegel ändern kann, und daß die Übertragungsleistungsregelungsschleife (1, 2, 3, 6, 9) aber so eingerichtet ist, daß sie nach dem Umschalten von dem Kommunikationskanal (16) auf den Signalisierungskanal (15) derart steuert, daß der Übertragungspegel sich von einem niedrigen Pegel schnell auf einen hohen Pegel ändern kann.

3. Vorrichtung nach Anspruch 2, wobei der Signalisierungskanal (15) für die Verwendung in der Kommunikation zwischen der Gatewaystation (12) und der Endgerät/Mobilstation (13) und zwischen der Gatewaystation (12) und einer Netzwerksteuerungsstation (11) eingerichtet ist und die Übertragungsleistungspegel der Gatewaystation (12) und der Endgerät-/Mobilstation (13) auf den höchsten Pegel eingestellt sind.

4. Vorrichtung nach Anspruch 2, wobei der Kommunikationskanal (16) für die Verwendung in der Kommunikation zwischen der Gatewaystation (12) und der Endgerät-/Mobilstation (13) eingerichtet ist und die Übertragungsleistungspegel der Gatewaystation (12) und der Endgerät-/Mobilstation (13) auf der Basis eines Empfangspegels, der von der Gatewaystation (12) oder der Endgerät-/Mobilstation (13) erkannt wird und an die andere der beiden gesendet wird, auf den optimalen Übertragungspegel eingestellt werden.

5. Vorrichtung nach Anspruch 2, wobei die Übertragungsleistungsregelungsschleife (1, 2, 3, 6, 9) aufweist: eine Übertragungsleistungssteuerungseinrichtung (1) zum Empfangen eines Eingangssignals und Steuern des Übertragungspegels gemäß eines Antwortsteuerungssignals, eine Pegelerkennungseinrichtung (3) zum Erkennen einer Ausgabe der Übertragungsleistungssteuerungseinrichtung (1), eine Vergleichseinrichtung (6) zum Vergleichen des von der Pegelerkennungseinrichtung (3) erkannten Übertragungspegels mit einem voreingestellten Pegel, um einen Fehler zu erhalten, eine Antwortsteuerungseinrichtung (7, 8, 9) zum Erzeugen eines Antwortsteuerungssignals zum Steuern der Übertragungsleistungssteuerungseinrichtung (1) durch den von der Vergleichseinrichtung (6) erhaltenen Fehler, wobei die Antwortsteuerungseinrichtung (7, 8, 9) ferner so eingerichtet ist, daß sie die Übertragungsleistungssteuerungseinrichtung (1) nach dem Umschalten von dem Signalisierungskanal (15) auf den Kommunikationskanal (16) derart steuert, daß der Übertragungspegel sich langsam von einem hohen Pegel auf einen niedrigen Pegel ändern kann, wobei die Antwortsteuerungseinrichtung (7, 8, 9) aber so eingerichtet ist, daß sie die Übertragungsleistungssteuerungseinrichtung (1) nach Umschalten von dem Kommunikationskanal (16) auf den Signalisierungskanal (15) derart steuert, daß der Übertragungspegel sich schnell von einem niedrigen Pegel auf einen hohen Pegel ändern kann.

6. Vorrichtung nach Anspruch 5, wobei die Antwortsteuerungseinrichtung aufweist: eine Unterscheidungseinrichtung (7) zum Feststellen einer Polarität des von der Vergleichseinrichtung (6) erhaltenen Fehlers und eine Mittelungseinrichtung (9) zum Mitteln von Fehlerpegeln, deren mittlere Abtastungsanzahl entsprechend der Polarität des Fehlers gesteuert wird.

7. Vorrichtung nach Anspruch 6, wobei die Antwortsteuerungseinrichtung aufweist: eine Auswahleinrichtung (8) zum Auswählen einer mittleren Abtastungsanzahl auf der Basis der Ausgabe der Unterscheidungseinrichtung (7), wobei die Mittelungseinrichtung (9) eingerichtet ist, den Fehlerpegel von einem Analogsignal in ein Digitalsignal umzuwandeln, wobei die mittlere Abtastungsanzahl durch die Auswahleinrichtung (9) ausgewählt wird.

8. Vorrichtung nach Anspruch 5, die ferner eine Leistungsverstärkungseinrichtung (2) zur Leistungsverstärkung einer Ausgabe der Übertragungsleistungssteuerungseinrichtung (1) aufweist, wobei die Pegelerkennungseinrichtung (3) eingerichtet ist, einen Ausgangspegel der Übertragungsleistungsverstärkungseinrichtung (2) zu erkennen.

9. Vorrichtung nach Anspruch 5, wobei die Antwortsteuerungseinrichtung aufweist: eine Unterscheidungseinrichtung (7) zum Feststellen einer Polarität des von der Vergleichseinrichtung (6) erhaltenen Fehlers, ein Filter mit einer veränderbaren Grenzfrequenz und eine Auswahleinrichtung zum Auswählen der Grenzfrequenz des Filters auf der Grundlage einer Ausgabe der Unterscheidungseinrichtung (7), wobei die Übertragungsleistungssteuerungseinrichtung (1) durch das Filter mit der Grenzfrequenz, die von der Auswahleinrichtung ausgewählt wird, gesteuert wird.

## Revendications

1. Procédé de commande de puissance de transmission destiné à être utilisé dans un système de communication radio mobile par satellite, dans lequel une station passerelle (12) et une station terminale/mobile (13) effectuent une communication par une attribution à la demande en utilisant un canal de signalisation (15) et un canal de communication (16) par l'intermédiaire d'un satellite de communication (14), **caractérisé en ce qu'**une boucle de commande de puissance de transmission (1, 2, 3, 6, 9) prévue dans l'une de la station passerelle (12) et de la station terminale/mobile (13) pour commander la puissance de transmission de la station passerelle (12) ou de la station terminale/mobile (13) est commandée de sorte que, lorsqu'un canal de transmission destiné à un usage actuel doit être passé du canal de signalisation (15) au canal de communication (16), une vitesse de réponse de la boucle de commande de puissance de transmission (1, 2, 3, 6, 9) est réglée à une valeur plus faible, mais lorsque le canal de transmission destiné à un usage actuel doit être passé du canal de communication (16) au canal de signalisation (15), la vitesse de réponse de la boucle de commande de puissance de transmission (1, 2, 3, 6, 9) est réglée à une valeur plus élevée.

2. Dispositif de commande de puissance de transmission pour un système de communication radio mobile par satellite, dans lequel une station passerelle (12) et une station terminale/mobile (13) sont agencées pour effectuer une communication par une attribution à la demande en utilisant un canal de signalisation (15) et un canal de communication (16) par l'intermédiaire d'un satellite de communication, **caractérisé par** :
une boucle de commande de puissance de transmission (1, 2, 3, 6, 9) pour détecter une puissance de transmission de chacune de ladite station passerelle (12) et de ladite station terminale/mobile (13) et pour commander par rétroaction un niveau de transmission de la puissance de transmission de sorte que, lors d'un passage dudit canal de signalisation (15) audit canal de communication (16), ladite boucle de commande de puissance de transmission (1, 2, 3, 6, 9) soit agencée pour effectuer une commande de sorte que le niveau de transmission puisse passer d'un niveau élevé à un niveau faible à une faible vitesse, mais lors d'un passage dudit canal de communication (16) audit canal de signalisation (15), ladite boucle de commande de puissance de transmission (1, 2, 3, 6, 9) soit agencée pour effectuer une commande de sorte que le niveau de transmission puisse passer d'un niveau faible à un niveau élevé à une vitesse élevée.

3. Dispositif selon la revendication 2, dans lequel ledit canal de signalisation (15) est agencé pour être utilisé pour une communication entre ladite station passerelle (12) et ladite station terminale/mobile (13) et entre ladite station passerelle (12) et une station de commande de réseau (11), et les niveaux de puissance de transmission de ladite station passerelle (12) et de ladite station terminale/mobile (13) sont réglés au niveau le plus élevé.

4. Dispositif selon la revendication 2, dans lequel ledit canal de communication (16) est agencé pour être utilisé pour une communication entre ladite station passerelle (12) et ladite station terminale/mobile (13), et les niveaux de puissance de transmission de ladite station passerelle (12) et de ladite station terminale/mobile (13) sont réglés à un niveau de transmission optimal basé sur un niveau de réception détecté par l'une et transmis à l'autre de ladite station passerelle (12) et de ladite station terminale/mobile (13).

5. Dispositif selon la revendication 2, dans lequel ladite boucle de commande de puissance de transmission (1, 2, 3, 6, 9) comprend des moyens de commande de puissance de transmission (1) pour recevoir un signal d'entrée et pour commander le niveau de transmission conformément à un signal de commande de réponse, des moyens de détection de niveau (3) pour détecter une sortie desdits moyens de commande de puissance de transmission (1), des moyens de comparaison (6) pour comparer le niveau de transmission détecté par lesdits moyens de détection de niveau (3) avec un niveau de transmission prédéterminé afin d'obtenir une erreur, et des moyens de commande de réponse (7, 8, 9) pour produire un signal de commande de réponse pour commander lesdits moyens de commande de puissance de transmission (1) à partir de l'erreur obtenue par lesdits moyens de comparaison (6), et dans lequel, en outre, lors d'un passage dudit canal de signalisation (15) audit canal de communication (16), lesdits moyens de commande de réponse (7, 8, 9) sont agencés pour commander lesdits moyens de commande de puissance de transmission (1) de sorte que le niveau de transmission puisse passer d'un niveau élevé à un niveau faible à une faible vitesse, mais lors d'un passage dudit canal de communication (16) audit canal de signalisation (15), lesdits moyens de commande de réponse (7, 8, 9) sont agencés pour commander lesdits moyens de commande de puissance de transmission (1) de sorte que le niveau de transmission puisse passer d'un niveau faible à un niveau élevé à une vitesse élevée.

6. Dispositif selon la revendication 5, dans lequel lesdits moyens de commande de réponse comprennent des moyens de discrimination (7) pour distinguer une polarité de l'erreur obtenue par lesdits moyens de comparaison (6) et des moyens de calcul de moyenne (6) pour calculer une moyenne de niveaux d'erreur dont le nombre d'échantillons moyen est commandé conformément à la polarité de l'erreur.

7. Dispositif selon la revendication 6, dans lequel lesdits moyens de commande de réponse comprennent des moyens de sélection (8) pour sélectionner un nombre d'échantillons moyen sur la base d'une sortie desdits moyens de discrimination (7), et dans lequel lesdits moyens de calcul de moyenne (9) sont agencés pour convertir le niveau d'erreur d'un signal analogique en un signal numérique, le nombre d'échantillons moyen étant sélectionné par lesdits moyens de sélection (9).

8. Dispositif selon la revendication 5, comprenant en outre des moyens d'amplification de puissance (2) pour amplifier la puissance d'une sortie desdits moyens de commande de puissance de transmission (1), et dans lequel lesdits moyens de détection de niveau (3) sont agencés pour détecter un niveau de sortie desdits moyens d'amplification de puissance de transmission (2) .

9. Dispositif selon la revendication 5, dans lequel lesdits moyens de commande de réponse comprennent des moyens de discrimination (7) pour distinguer une polarité de l'erreur obtenue par lesdits moyens de comparaison (6), un filtre ayant une fréquence de coupure variable, et des moyens de sélection pour sélectionner la fréquence de coupure dudit filtre sur la base d'une sortie desdits moyens de discrimination (7), et lesdits moyens de commande de puissance de transmission (1) sont commandés par l'intermédiaire dudit filtre, la fréquence de coupure étant sélectionnée par lesdits moyens de sélection.
